# EUROPEAN PATENT SPECIFICATION

(11) **EP 3 077 151 B1**
(45) Date of publication and mention of the grant of the patent: **20.02.2019**
(21) Application number: 14867035.9
(22) Date of filing: 01.12.2014
(51) Int. Cl.: B23K 35/28, B23K 35/02, B32B 15/01, C22C 18/00, C22C 18/04

(54) **ZINC-BASED LEAD-FREE AND TIN-FREE SOLDER COMPOSITIONS**
ZINKBASIERTE BLEIFREIE UND ZINNFREIE LÖTZUSAMMENSETZUNGEN
COMPOSITIONS DE BRASURE SANS PLOMB ET SANS ÉTAIN À BASE DE ZINC

(30) Priority: 04.12.2013 US 201361911592 P; 31.01.2014 US 201461934161 P; 26.11.2014 US 201414554126
(43) Date of publication of application: 12.10.2016
(73) Proprietor: Honeywell International Inc., Morris Plains, NJ 07950 (US)
(72) Inventor: LI, Jianxing, Morristown, NJ 07962-2245 (US); STEELE, David E., Morristown, NJ 07962-2245 (US); TOWNSEND, Richard G., Morristown, NJ 07962-2245 (US); ALBAUGH, Kevin B., Morristown, NJ 07962-2245 (US); WU, Xiaodan, Morristown, NJ 07962-2245 (US)
(74) Representative: Crooks, Elizabeth Caroline
(86) International application number: PCT/US2014/067913
(87) International publication number: WO 2015/084723

(56) References cited:
- EP-A1- 1 250 032
- EP-A1- 1 531 024
- WO-A2-2007/050571
- JP-A- 2000 208 533
- JP-A- 2001 127 076
- JP-A- 2006 322 027
- JP-A- 2011 251 332
- JP-A- 2012 183 558
- US-A- 5 698 160
- US-A1- 2012 313 230
- US-A1- 2012 313 230
- US-A1- 2013 045 131

## Description

### FIELD OF THE INVENTION

The present disclosure relates to electronics packaging arrangements having lead-free solders. In particular, the present disclosure relates to lead-free solder compositions and lead frame constructs for use therewith.

### DESCRIPTION OF THE RELATED ART

Solders are used in the manufacture and assembly of a variety of electromechanical and electronic devices. In the electronics manufacturing industry, for example, solders are used for making soldered connections between a chip and a lead frame. In the past, solder compositions have commonly included substantial amounts of lead to provide the solder compositions with desired properties such as melting properties, mechanical properties, wetting properties, and thermal properties. Some tin-based solder compositions have also been developed.

More recently, there have been attempts at producing lead-free and tin-free solder compositions that provide desired performance. One family of lead-free solders are zinc-based solders, which are alloys including zinc as a major component, together with other alloying elements such as aluminum and/or additional elements as discussed, for example, in U.S. Patent Application Serial No. 13/586,074 (U.S. Patent Application Publication No. 2013/0045131), entitled "Lead-Free Solder Compositions," assigned to the assignee of the present invention.

JP 2000 208533 A discloses a die bonding Zn alloy containing 2-9 wt.% Ge, 2-9 wt.% Al, 0.01-0.5 wt.% Mg, and the balance Zn and impurities.

JP 2011 251332 A discloses a high-temperature lead-free solder paste comprising zinc as a main component.

JP 2012 183558 A discloses a zinc-based lead-free solder alloy that includes 1-10 wt.% of Al, one or more elements selected from 0.001-1 wt.% Ga, 0.1-10 wt.% In, 0.001-10 wt.% Ge, 0.1-10 wt.% Si and 0.1-10 wt.% Sn.

### SUMMARY OF THE INVENTION

The present disclosure provides electronic packaging arrangements having lead-free solders. In particular, the present disclosure provides lead-free solder compositions and lead frame constructs for use therewith. The invention is defined in the claims.

The lead-free and tin-free solder compositions are zinc-based. The solder compositions include zinc, aluminum, and germanium as major components and gallium and magnesium as minor components. The lead-free and tin-free, zinc-based solder compositions may exhibit desirable melting properties, mechanical properties, and wetting properties, for example.

The lead frame constructs may include a metallic lead frame, a metallic barrier layer to prevent oxidation of the lead frame, and a relatively thin wetting promoting layer to promote uniform wetting of a solder, such as a lead-free and tin-free, zinc-based solder, onto the lead frame during a die-connect process by which a chip is connected to the lead frame. The lead frame and the wetting promoting layer may be constructed of copper, and the barrier layer may be constructed of nickel, for example. A copper/zinc intermetallic layer is formed during the flow and solidification of the solder. Substantially all of the copper in the copper layer is consumed during formation of the copper/zinc intermetallic layer, and the intermetallic layer is sufficiently thin to resist internal cracking failure during manufacture and subsequent use of the electronics packaging arrangement.

In one form thereof, the present disclosure provides a solder composition including zinc as a first major component, aluminum as a second major component, germanium as a third major component, gallium as a first minor component, and magnesium as a second minor component, wherein each of the minor components is present in the solder composition in an amount less than each of the major components.

In another form thereof, the present disclosure provides a lead free and tin free solder composition consisting of 77 to 93 weight percent zinc, 3 to 15 weight percent aluminum, 3 to 7 weight percent germanium, 0.25 to 0.50 weight percent gallium, and 0.125 to 0.35 weight percent magnesium; and optionally 0.001 to 2.5 weight percent neodymium.

In yet another form thereof, the present disclosure provides a solder wire including a lead-free and tin-free, zinc-based solder composition.

In still yet another form thereof, the present disclosure provides an electronics packaging arrangement including a chip and a lead frame construct coupled to the chip, the lead frame construct including a metallic lead frame, a metallic barrier layer on the metallic lead frame, and an intermetallic layer on the metallic barrier layer and coupled to the chip, the intermetallic layer being formed from a wetting promoting layer on the metallic barrier layer and a lead-free and tin-free, zinc-based solder composition.

### BRIEF DESCRIPTION OF THE DRAWINGS

The above-mentioned and other features and advantages of this disclosure, and the manner of attaining them, will become more apparent and the invention itself will be better understood by reference to the following description of embodiments of the invention taken in conjunction with the accompanying drawings, wherein:
FIG. 1A is a schematic cross sectional view of an exemplary electronics packaging arrangement including a chip connected to a lead frame.
FIG. 1B is a fragmentary view of a portion of FIG. 1A.
FIG. 2A is a schematic cross sectional view of an exemplary lead frame construct used in the electronics packaging arrangement of FIGS. 1A and 1B.
FIG. 2B is a fragmentary view of a portion of FIG. 2A.
FIG. 3 shows the experimental setup for a high angle breakage rate test of Example 1.
FIGS. 4 and 5 correspond to Example 2, wherein:

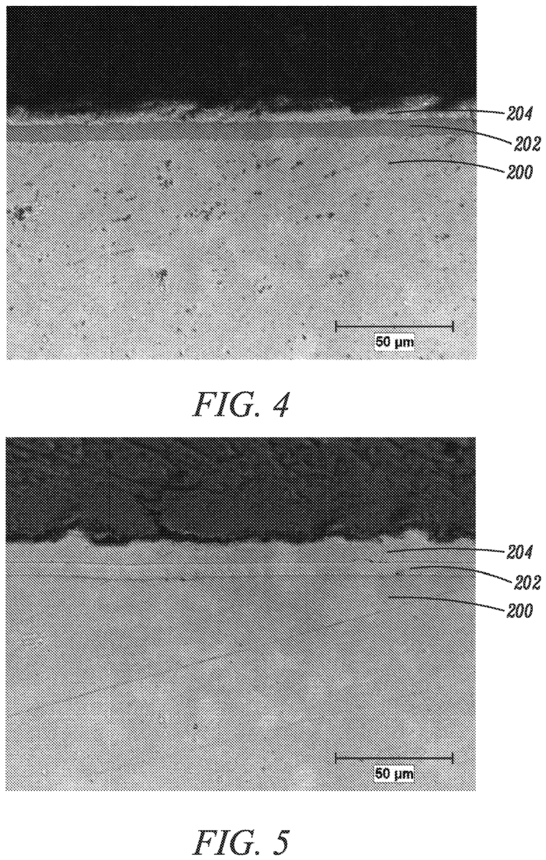

FIG. 4 is a cross sectional optical microscopy image of a lead frame construct having a copper layer with a thickness of 2 µm; and
FIG. 5 is a cross sectional optical microscopy image of a lead frame construct having a copper layer with a thickness of 8 µm.

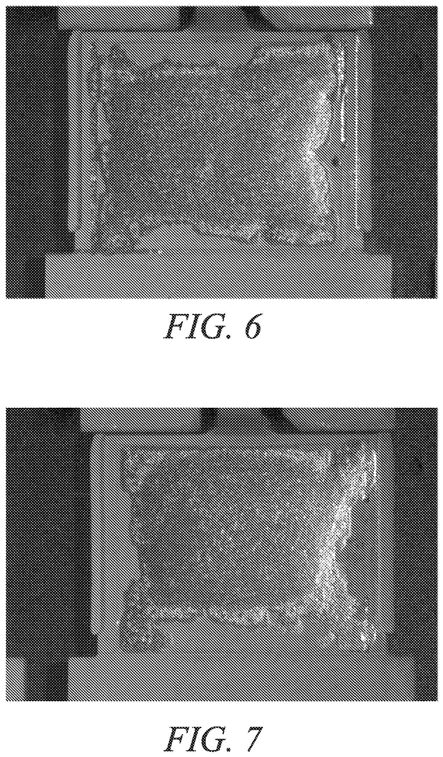

FIGS. 6-8 correspond to Example 3, wherein:
FIG. 6 is an image of a zinc-based solder wetted onto the lead frame of FIG. 4;
FIG. 7 is an image of a zinc-based solder wetted onto the lead frame of FIG. 5; and

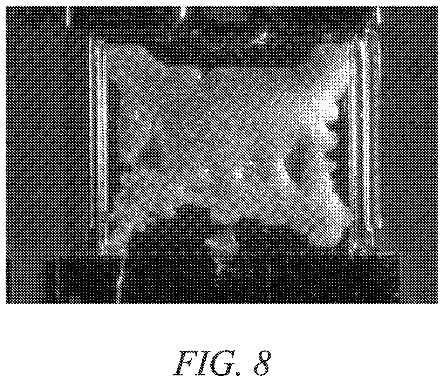

FIG. 8 is an image of a zinc-based solder wetted onto a control lead frame which includes a nickel barrier layer but which lacks a copper layer.

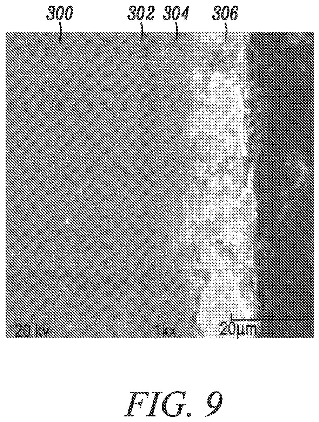

FIGS. 9-12 correspond to Example 4, wherein:
FIG. 9 is a scanning electron microscope (SEM) cross sectional image of the zinc-based solder solidified onto the lead frame of FIG. 6;

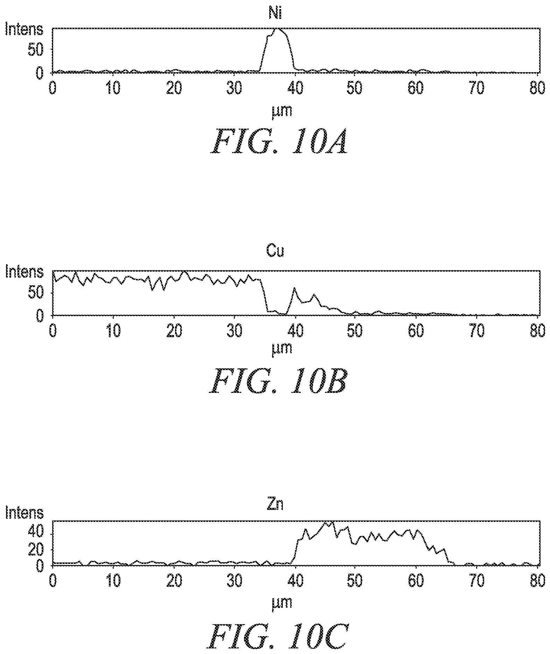

FIG. 10 is a series of plots corresponding to an X-ray line scan elemental analysis of FIG. 9;

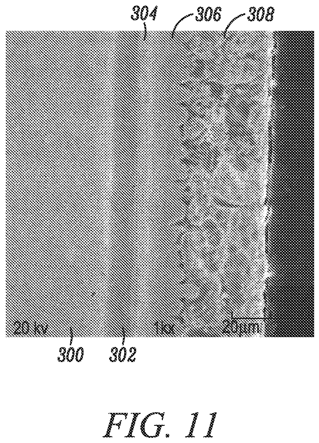

FIG. 11 is a scanning electron microscope (SEM) cross sectional image of the zinc-based solder solidified onto the lead frame of FIG. 7; and

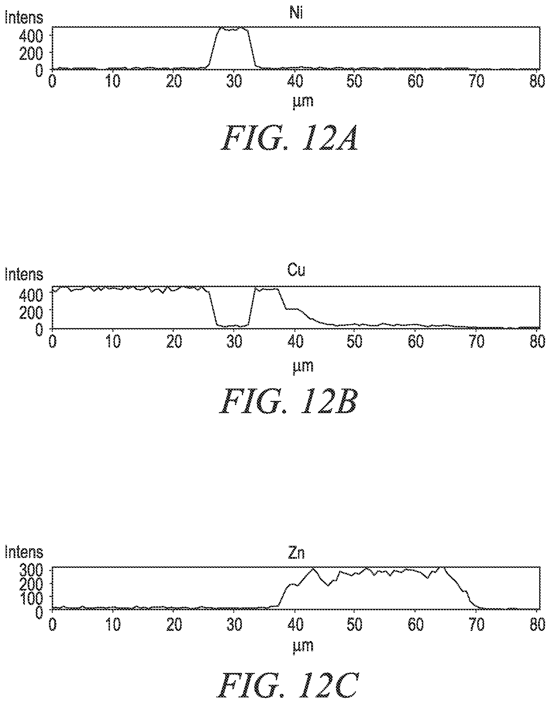

FIG. 12 is a series of plots corresponding to an X-ray line scan elemental analysis of FIG. 11.

### DETAILED DESCRIPTION

Solder compositions are fusible metals and metal alloys used to join two or more substrates or workpieces and have melting points below those of the workpieces. In the semiconductor manufacturing industry, for example, solder compositions are used in die-connect applications for making soldered connections between a chip and a lead frame.

### I. Solder Compositions

Solder compositions are disclosed herein that are lead free and tin free. The lead-free and tin free solder compositions are zinc-based solder compositions, as described further below.

Solder compositions may be provided in many different forms including, but not limited to, bulk solder products, solder pastes, and solder wires, as discussed further below.

A solder composition in the form of a solder paste may be a fluid or putty-like material that may be applied to a substrate using various methods including, but not limited to, printing and dispensing, such as with a syringe. Example solder paste formulations may be formed by mixing powdered metal solder composition with a flux, where the flux is a thick medium that acts as a temporary adhesive. The flux may hold the components of the solder paste together until the soldering process melts the powdered solder composition. Suitable viscosities for a solder paste may vary depending on how the solder paste is applied to the substrate. Suitable viscosities for a solder paste include 300,000-700,000 centipoise (cP).

A solder composition in the form of a solder wire may be formed by drawing a solder composition through a die to provide a thin solder wire. Suitable solder wires may have a diameter less than about 1 millimeter (mm), for example, from about 0.3 to about 0.8 mm. In some embodiments, the solder wire is capable of being rolled or coiled on a spool without breaking into two or more pieces. For example, a solder wire may be rolled on a spool having an inner hub diameter of 51 mm located between two outer flanges having diameters of 102 mm. As the solder wire is initially rolled on the spool, portions of the solder wire closest to the inner hub are coiled into a spool having an effective diameter of approximately 51 mm. As additional solder wire is rolled on the spool, the effective diameter of the spool increases toward 102 mm due to the underlying layers of solder wire on the inner hub.

Regardless of form, a solder composition may be evaluated based on its melting properties, mechanical properties, and wetting properties, for example. These properties are discussed further below.

A solder composition may be evaluated based on its melting properties, including its solidus temperature, liquidus temperature, and melting temperature range between the liquidus and solidus temperatures. The solidus temperature of the solder composition quantifies the temperature at which the solder composition begins to melt. Below the solidus temperature, the solder composition is completely solid. In some embodiments, the solidus temperature may be around 300° C or more to allow step soldering operations and to minimize thermal stress in the end use device. The liquidus temperature of the solder composition quantifies the temperature above which the solder composition is completely melted. The liquidus temperature is the maximum temperature in which crystals (e.g., solid material) can coexist with a melt (e.g., liquid material). Above the liquidus temperature, the solder composition is a homogeneous melt or liquid. The melting temperature range of the solder composition is defined between the liquidus and solidus temperatures. In some embodiments, it may be preferable to have a narrow melting temperature range to minimize the range at which the solder composition exists in two phases.

A solder composition may also be evaluated based on its mechanical properties, such as elongation and ductility. The ductility of the solder composition refers to the ability of the solder composition to deform under tensile stress. Solder joints experience reduced solder joint strength in an end device over the lifetime of the device. A ductile solder composition may prolong the lifetime of the device and is therefore desirable. A ductile solder composition may also be desirable in the fabrication of solder wires as described further herein to enable the solder wire to be coiled or rolled onto a spool. Ductility may be measured with a spool bend tester to determine high angle (greater than 90°) ductility measurements. The spool bend tester may also be used to determine low angle (less than 90°) ductility measurements. Suitable ductility values depend on the end use of the solder composition. In some embodiments, suitable solder compositions may have a high angle break rate of 0% and a low angle break rate less than 50%, less than 40%, or less than 30%, for example.

A solder composition may also be evaluated based on its wetting properties, which refer to the ability of the solder composition to flow and wet the surface of the substrate or workpiece. Increased wetting generally provides an increased bond strength between workpieces. Wetting may be measured using a dot wet test, for example.

An exemplary solder composition of the present disclosure is a zinc-based solder composition including zinc (Zn) as the majority or principal component in combination with, or alloyed with other elements. In addition to zinc, other major components of the solder composition include aluminum (Al) and germanium (Ge). Minor components of the solder composition include gallium (Ga) and magnesium (Mg), wherein each of the minor components is present in the solder composition in an amount less than each of the major components. The components or ingredients may be present in the solder composition in the following relative amounts: zinc > aluminum > germanium >> gallium > magnesium.

Zinc is present in the solder composition in an amount between 77 and 93 weight percent. In one embodiment, zinc may be present in the solder composition in an amount as little as 77, 79, 81, 83, or 85 weight percent or as great as 87, 89, 91, or 93 weight percent, or within any range delimited by any pair of the foregoing values. For example, zinc may be present in the solder composition in an amount between 79 and 91 weight percent; between 81 and 89 weight percent; or between 79 and 89 weight percent. In a particular embodiment, zinc may be present in the solder composition in an amount of 88.25 weight percent. Zinc may make up the balance of the solder composition.

Aluminum is present in the solder composition in an amount between 3 and 15 weight percent. In one embodiment, aluminum may be present in an amount as little as 3, 3.5, 4, 4.5, 5, 5.5, or 6 weight percent or as great as 6.5, 7, 7.5, 8, 8.5, 9, 11, 13, or 15 weight percent, or within any range delimited by any pair of the foregoing values. For example, aluminum may be present in the solder composition in an amount between 3.5 and 13 weight percent; between 4 and 11 weight percent; between 4.5 and 9 weight percent; between 5 and 8.5 weight percent; between 5.5 and 8 weight percent; between 5.5 and 7.5 weight percent; between 5.5 and 7 weight percent; or between 5.5 and 6.5 weight percent. In a particular embodiment, aluminum may be present in the solder composition in an amount of a6 weight percent.

Germanium is present in the solder composition in an amount between 3 and 7 weight percent. In one embodiment, germanium may be present in an amount as little as 3, 3.5, 4, 4.5, or 5 weight percent or as great as 5.5, 6, 6.5 or 7 weight percent, or within any range delimited by any pair of the foregoing values. For example, germanium may be present in the solder composition in an amount between 3.5 and 6.5 weight percent; between 4 and 6 weight percent; or between 4.5 and 5.5 weight percent. In a particular embodiment, germanium may be present in the solder composition in an amount of 5 weight percent.

Gallium is present in the solder composition in an amount between 0.25 and 0.50 weight percent. In one embodiment, gallium may be present in an amount as little as 0.25, 0.275, 0.30, 0.325, 0.35, 0.375, 0.40, 0.425, 0.45 or 0.475 weight percent or as great as 0.50 weight percent, or within any range delimited by any pair of the foregoing values. In a particular embodiment, gallium may be present in the solder composition in an amount of 0.5 weight percent.

Magnesium is present in the solder composition in an amount between 0.125 and 0.35 weight percent. In one embodiment, magnesium may be present in an amount as little as 0.125, 0.15, 0.175, 0.20, or 0.225 weight percent or as great as 0.275, 0.30, 0.325 or 0.35 weight percent, or within any range delimited by any pair of the foregoing values. For example, magnesium may be present in the solder composition in an amount between 0.15 and 0.35 weight percent; between 0.175 and 0.325 weight percent; between 0.20 and 0.30 weight percent; or between 0.225 and 0.275 weight percent. In a particular embodiment, magnesium may be present in the solder composition in an amount of 0.25 weight percent.

In some embodiments, neodymium, a member of the lanthanide series, is used as a dopant. The dopant may be present in the solder composition in an amount up to 2.5 weight percent. In one embodiment, the dopant may be present in an amount as little as 0.001, 0.005, 0.01, 0.05, 0.1, or 0.5 weight percent or as great as 1.0, 1.5, 2.0, or 2.5 weight percent, or within any range delimited by any pair of the foregoing values. For example, the dopant may be present in an amount between 0.001 and 2.5 weight percent; between 0.005 and 2 weight percent; between 0.01 and 1.5 weight percent; between 0.05 and 1.5 weight percent; between 0.1 and 1.5 weight percent; between 0.5 and 1.5 weight percent; between 0.05 and 1 weight percent; between 0.1 and 1 weight percent; or between 0.5 and 1 weight percent.

In some embodiments, the dopant may have high oxygen affinity and act as a deoxidizer and/or provide a low oxidation molten component during a die bond process. In some embodiments, the dopant may improve the wetting of the solder. That is, in some embodiments the dopant may improve the ability of a solder to flow and wet the surface of the substrate or workpiece. As described herein, an increased or improved wetting generally provides an increased bond strength between workpieces.

When the solder composition contains one or more dopants, the ingredients may be present in the amounts shown in Table 1 below, wherein all examples are Reference Examples.

**Table 1**

| **Ingredient** | **Reference Example A Amount (weight %)** | **Reference Example B Amount (weight %)** | **Example C Amount (weight %)** | **Example D Amount (weight %)** |
|---|---|---|---|---|
| Zn | Balance | Balance | Balance | Balance |
| Al | 3-15 | 3-15 | 4-11 | 5-8.5 |
| Ge | 3-7 | 3-7 | 3.5-6.5 | 4.5-5.5 |
| Ga | 0.25-0.75 | 0.25-0.725 | 0.275-0.725 | 0.375-0.625 |
| Mg | 0.125-0.375 | 0.125-0.375 | 0.15-0.35 | 0.175-0.325 |
| Dopant(s) | 0.001-2.5 | 0.001-2.5 | 0.01-1.5 | 0.05-1 |
| **Total** | **100** | **100** | **100** | **100** |

When the solder composition consists or consists essentially of zinc, aluminum, germanium, gallium, and magnesium, without any dopants, the ingredients may be present in the amounts shown in Table 2 below, wherein all examples are Reference Examples.

**Table 2**

| **Ingredient** | **Reference Example E Amount (weight %)** | **Reference Example F Amount (weight %)** | **Example G Amount (weight %)** | **Example H Amount (weight %)** |
|---|---|---|---|---|
| Zn | Balance | Balance | Balance | Balance |
| Al | 3-15 | 3-15 | 4-11 | 5-8.5 |
| Ge | 3-7 | 3-7 | 3.5-6.5 | 4.5-5.5 |
| Ga | 0.25-0.75 | 0.25-0.725 | 0.275-0.725 | 0.375-0.625 |
| Mg | 0.125-0.375 | 0.125-0.375 | 0.15-0.35 | 0.175-0.325 |
| **Total** | **100** | **100** | **100** | **100** |

In a particular embodiment, according to the invention, the ingredients may be present in the amounts shown in

Table 3 below.

**Table 3**

| **Ingredient** | **Amount (weight %)** |
|---|---|
| Zn | 88.25 |
| Al | 6 |
| Ge | 5 |
| Ga | 0.5 |
| Mg | 0.25 |
| **Total** | **100** |

In another particular embodiment, according to the invention, the ingredients may be present in the amounts shown in Table 4 below.

**Table 4**

| **Ingredient** | **Amount (weight %)** |
|---|---|
| Zn | 88.15 |
| Al | 6 |
| Ge | 5 |
| Ga | 0.5 |
| Mg | 0.25 |
| Nd | 0.1 |
| **Total** | **100** |

In another particular embodiment, according to the invention, the ingredients may be present in the amounts shown in Table 5 below.

**Table 5**

| **Ingredient** | **Amount (weight %)** |
|---|---|
| Zn | 87.25 |
| Al | 6 |
| Ge | 5 |
| Ga | 0.5 |
| Mg | 0.25 |
| Nd | 1 |
| **Total** | **100** |

The solder composition is lead free and tin free. As used herein, "lead free" refers to solder compositions having less than 0.1 weight percent lead and "tin free" refers to solder compositions having less than 0.1 weight percent tin.

For any solder composition described or claimed herein, the sum of the weight percentages of all the components shall be 100%.

### II. Lead Frame Construct

Lead frame constructs are also disclosed herein for use with the lead-free and tin-free, zinc-based solder compositions described above.

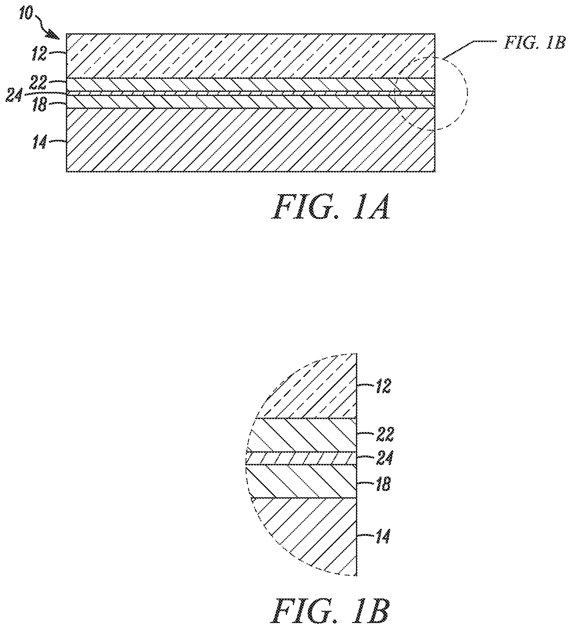

Referring to FIGS. 1A and 1B, a schematic cross sectional view of an exemplary electronics packaging arrangement 10 according to the present disclosure is shown, including a chip 12 (i.e., an integrated circuit and/or microprocessor) connected to a lead frame 14 via a multi-layer soldered connection of the type described below.

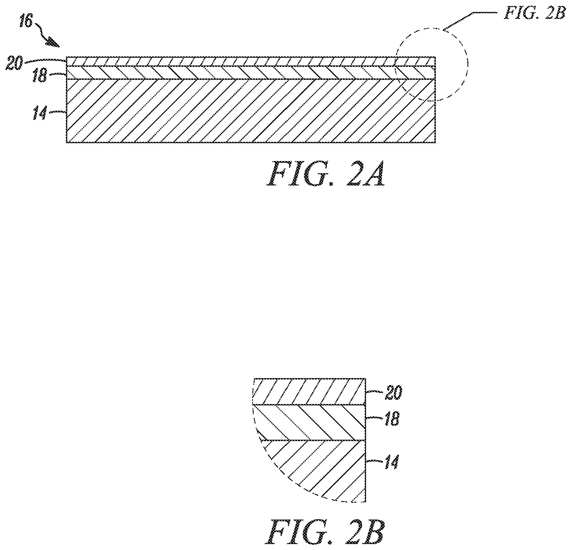

A lead frame construct 16 according to the present disclosure is shown in FIGS. 2A and 2B prior to use in a die-connect process by which chip 12 is connected to the lead frame construct 16 via a soldered connection to form the electronics packaging arrangement 10 shown in FIG. 1A. Lead frame construct 16 includes lead frame 14 in the form of a metallic, electrically-conductive substrate to which one or more chips (e.g., chip 12 of FIG. 1A) may be attached, and lead frame 14 and/or an attached chip may also include electrical leads or other components (not shown) connected thereto. Lead frame 14 is typically made of pure copper or a copper alloy.

When lead frame 14 is made of pure copper or a copper alloy, however, the surface of the copper of lead frame 14 will tend to spontaneously oxidize to copper oxide upon contact with oxygen in the atmosphere, thereby forming a copper oxide layer. Copper oxide is electrically insulating, which can degrade the electrical conductivity of lead frame 14, and any copper oxide layer that is formed may also impede the ability for liquid solder to wet the surface of lead frame 14 during a die-connect process and/or may compromise the integrity of the resulting connection between lead frame 14 and chip 12.

Lead frame 14 is provided with a metallic barrier layer 18 on at least one surface of lead frame 14, and optionally, on each of the opposite surfaces of lead frame 14, depending on the application, in order to prevent oxidation of the metal of the underlying lead frame 14. Barrier layer 18 may be made of a metal that has a reduced tendency for oxidation as compared with the metal of lead frame 14. In one embodiment, barrier layer 18 is made of pure nickel or a nickel alloy. Thus, barrier layer 18 covers the surface of lead frame 14 and prevents the metal of lead frame 14 from contacting the surrounding environment and spontaneously oxidizing with oxygen. Further, as discussed below, barrier layer 18 also functions to prevent the metal of lead frame 14 from contacting the solder which is used to secure chip 12 to lead frame 14 during the die-connect process, which leads to the formation of intermetallic compounds between the metal of lead frame 14 and the metal(s) of the solder.

Barrier layer 18 may be formed on lead frame 14 by a plating process, such as via electroplating or electro-less plating. In addition, barrier layer 18 may be formed in a continuous or blanket manner over the entire surface of lead frame 14 or alternatively, may be selectively formed over the die pad areas and/or other selected regions of the surface of lead frame 14.

In an electroplating process, lead frame 14 is the cathode in an electroplating bath of a solution of the dissolved metal to be deposited. The metal to be deposited is typically the anode. Upon application of electric current, dissolved metal ions in the bath are reduced and deposit onto the lead frame cathode to form barrier layer 18.

In one embodiment, a sulfamate electrolyte bath may contain dissolved nickel, and the electroplating bath may also lack organic additives that are typically present in the form of brightening agents, for example. Use of the foregoing bath may result in a deposited metal surface having a somewhat rough or "matte" finish.

Alternatively, an electro-less deposition process may be used which is not conducted in the presence of an applied electric current, but rather is an autocatalytic reaction that employs a reducing agent, such as hydrated sodium hypophosphite (NaPO₂H₂·H₂O), to reduce ions of the deposited metal from solution and deposit the metal onto the surface of lead frame 14. A barrier layer of nickel plated onto a lead frame according to such a process may be referred to as an "electroless nickel" layer, and typically will be a nickel alloy including nickel which is alloyed with about 2-4 weight percent of phosphorus, for example.

Typically, the thickness of the barrier layer 18 is up to 10 microns (µm), such as between 1 µm and 10 µm. In one embodiment, the thickness of barrier layer 18 may be as little as 1, 2, or 3 µm and as great as 5, 6, 7, 8, 9, or 10 µm, for example, or may have a thickness within any range defined between any pair of the foregoing values. For example, the thickness of barrier layer 18 may be between 2 and 9 µm; between 2 and 8 µm; between 2 and 7 µm; between 2 and 6 µm; between 2 and 5 µm; between 3 and 9 µm; between 3 and 8 µm; between 3 and 7 µm; between 3 and 6 µm; or between 3 and 5 µm.

Referring to FIGS. 2A and 2B, lead frame construct 16 includes a wetting promoting layer 20, which may alternatively be referred to as a wetting promoting "flash," and which may be relatively thin in comparison with barrier layer 18 for the reasons discussed below. Wetting promoting layer 20 is formed on barrier layer 18 to aid in wetting of the liquid solder in a uniform manner over the lead frame 14 when the liquid solder is flowed onto the lead frame 14 during a die-connect process.

Wetting promoting layer 20 may be a copper or copper alloy layer, though may alternatively be layer of zinc, bismuth, tin, or indium, as well as alloys of the foregoing. In particular, it has been found that certain solder compositions and, in particular, zinc-based solder compositions of the type disclosed above, wet very uniformly and effectively over a copper or copper alloy surface. If desired, lead frame construct 16 may be packaged in an inert environment prior to use in a die-connect process to prevent oxidation of wetting promoting layer 20. If oxidation resistance is desired in addition to the promotion of solder wetting, layer 20 may alternatively be a layer of gold, platinum, palladium, ruthenium, or silver.

Wetting promoting layer 20 may have a thickness up to 10 microns (µm), such as between 1 µm and 10 µm. In one embodiment, the thickness of copper layer 16 may be as little as 1, 2, or 3 µm and as great as 5, 6, 7, 8, 9, or 10 µm, for example, or may have a thickness within any range defined between any pair of the foregoing values. For example, the thickness of wetting promoting layer 20 may be between 2 µm and 9 µm; between 2 µm and 8 µm; between 2 µm and 7 µm; between 2 µm and 6 µm; between 2 µm and 5 µm; between 3 µm and 9 µm; between 3 µm and 8 µm; between 3 µm and 7 µm; between 3 µm and 6 µm; or between 3 µm and 5 µm.

Similar to the manner in which barrier layer 18 is formed on lead frame 14, wetting promoting layer 20 may be deposited on barrier layer 18 via an electrolytic or electro-less plating process, for example, and also may be deposited in a continuous or blanket manner over the entire lead frame and/or barrier layer or alternatively, may be deposited over only the die pad areas and/or other selected regions of the surface of lead frame and/or barrier layer.

Returning to FIGS. 1A and 1B, lead-free and tin-free, zinc-based solder compositions of the type disclosed above may advantageously be used in the present packaging arrangements for the solder layer 22 used to connect chip 12 to lead frame 14. Other suitable zinc-based solder compositions for use in the solder layer 22 are disclosed in U.S. Patent Application Serial No. 13/586,074.

The present inventors have found that a disadvantage of applying a liquid zinc-based solder directly to a copper lead frame is that, although the zinc-based solder uniformly wets the surface of the copper lead frame during a die-connect process, the elevated liquidus temperature of the liquid, flowable zinc-based solder, which is typically greater than 330° C for zinc-based solders, results in the formation of copper/zinc (Cu/Zn) intermetallic compounds that are relatively brittle and typically manifest in the formation of a Cu/Zn intermetallic layer or interface between the copper lead frame and the zinc-based solder upon solidification of the zinc-based solder. The intermetallic layer may be relatively thick when liquid zinc-based solder is applied directly to a copper lead frame.

Additionally, after manufacture and during use of the packaging arrangement in a service application in which the electronics packaging arrangement is exposed to high temperatures, such as greater than about 150° C, for example, further Cu/Zn intermetallic compounds may be formed and, in this manner, the thickness of the Cu/Zn intermetallic layer or interface may increase over time. In many electronics packaging configurations, particularly in "large frame" applications having a chip-to-lead frame connection of greater than 25 mm², for example, the thickness of the Cu/Zn intermetallic layer may have an undesirable thickness, or may eventually increase during use to an undesirable thickness, potentially resulting in a die crack event in which the connection between the chip and the lead frame fails across the relatively brittle intermetallic layer. In addition, the relatively high modulus of zinc-based solders tends to provide little stress relief to the foregoing connections.

Additionally, zinc-based solders tend to wet rather poorly onto metallic barrier layers such as nickel, which are provided to protect the underlying lead frame from oxidation, as discussed above.

However, the wetting promoting layer 20 provided in the present packaging arrangement 10 disclosed herein is relatively thin and, for the reasons discussed below, may be considered as a wetting-inducing, sacrificial layer. When made of copper or a copper alloy, for example, the wetting promoting layer 20 initially provides an exposed copper layer or surface to promote uniform wetting of a zinc-based solder upon flow application during the die-connect process, and yet substantially completely reacts with zinc in the zinc-based solder to form a thin, dedicated Cu/Zn intermetallic layer 24 or interface between the barrier layer 18 and the solder layer 22, as shown in FIGS. 1A and 1B. The dedicated Cu/Zn intermetallic layer 24 results from consumption of substantially all of the copper initially present in the copper wetting promoting layer 20, and thereby results in a Cu/Zn intermetallic layer 24 which is relatively thin, and has no possibility of increasing during use of the electronics packaging arrangement due to the fact that substantially all of the copper in the copper wetting promoting layer 20 combines with zinc in the solder layer 22 to form the intermetallic layer 24 during solder flow in the die-connect process. Also, the dedicated Cu/Zn intermetallic layer 24 is sufficiently thin that the likelihood of crack failure within such layer is substantially decreased, leading to favorable endurance characteristics for the packaging construct 10.

The dedicated, Cu/Zn intermetallic layer 24 may have a thickness up to 10 microns (µm), such as between 3 µm and 10 µm. In one embodiment, the thickness of copper layer 16 may be as little as 3, 4, or 5 µm and as great as 5, 6, 7, 8, 9, or 10 µm, for example, or may have a thickness within any range defined between any pair of the foregoing values. For example, the thickness of copper layer 16 may be between 4 µm and 9 µm; between 4 µm and 8 µm; between 4 µm and 7 µm; between 4 µm and 6 µm; between 4 µm and 5 µm; between 5 µm and 9 µm; between 5 µm and 8 µm; between 5 µm and 7 µm; or between 5 µm and 6 µm.

### EXAMPLES

The following non-limiting Examples illustrate various features and characteristics of the present invention, which is not to be construed as limited thereto.

### Example 1

### Preparation and Analysis of Solder Compositions

### I. Sample Preparation

In this Example, a plurality of solder alloy samples containing various amounts of zinc (Zn), aluminum (Al), germanium (Ge), gallium (Ga), and magnesium (Mg) were prepared according to Table 6 below. Each sample was prepared by heating the materials to a temperature of 410° C to form a melt. Then, each melt was cast in a nitrogen atmosphere to form a 1 inch (2.54 cm) diameter billet. In the following, sample 1 and 4 are according to the scope of the invention.

**Table 6**

| **Sample** | **Nominal Amounts (weight %)** | | | | | **Assay Amounts (weight %)** | | | | |
|---|---|---|---|---|---|---|---|---|---|---|
| | **Zn** | **Al** | **Ge** | **Ga** | **Mg** | **Zn** | **Al** | **Ge** | **Ga** | **Mg** |
| 1 | balance | 6 | 5 | 0.5 | 0.25 | balance | 5.90 | 5.00 | 0.52 | 0.20 |
| 2 | balance | 6 | 5 | 1 | 0.25 | balance | 5.90 | 5.00 | 1.00 | 0.22 |
| 3 | balance | 6 | 5 | 0.75 | 0.25 | balance | 5.90 | 5.00 | 0.77 | 0.22 |
| 4 | balance | 6 | 5 | 0.25 | 0.25 | balance | 5.90 | 5.00 | 0.26 | 0.24 |
| 5 | balance | 6 | 5 | 0.05 | 0.25 | balance | 5.90 | 5.10 | 0.05 | 0.23 |
| 6 | balance | 6 | 5 | 0.5 | 0.5 | balance | 5.90 | 5.00 | 0.53 | 0.48 |
| 7* | balance | 6 | 5 | 0.5 | 0.38 | balance | 6.00 | 5.10 | 0.52 | 0.37 |
| 8 | balance | 6 | 5 | 0.5 | 0.12 | balance | 5.90 | 6.00 | 0.51 | 0.12 |
| 9 | balance | 6 | 5 | 0.5 | 0.05 | balance | 5.90 | 5.00 | 0.52 | 0.05 |
| 10 | balance | 6 | 5 | 1 | 1 | balance | 5.90 | 4.90 | 1.00 | 1.00 |
| 11 | balance | 6 | 5 | 0.05 | 0.05 | balance | 6.00 | 5.10 | 0.06 | 0.05 |
| 12 | balance | 6 | 8 | 0.5 | 0.25 | balance | 6.00 | 8.10 | 0.52 | 0.23 |
| 13 | balance | 6 | 2 | 0.5 | 0.25 | balance | 6.00 | 2.10 | 0.53 | 0.24 |
| 14 | balance | 4.5 | 0 | 1 | 1 | balance | 4.50 | 0.00 | 1.00 | 1.10 |
| 15 | balance | 4.5 | 5 | 1 | 1 | balance | 4.50 | 5.10 | 1.00 | 1.10 |
| 16 | balance | 4 | 2 | 3 | 1 | balance | 4.00 | 2.10 | 2.60 | 1.10 |
| 17 | balance | 7 | 3 | 0 | 3 | balance | 6.90 | 2.90 | 0.00 | 2.90 |
| 18 | balance | 5.8 | 5.1 | 3 | 0 | balance | 5.70 | 5.30 | 3.10 | 0.00 |

| | | | | | | | | | | |
|---|---|---|---|---|---|---|---|---|---|---|
| *Comparative Example | | | | | | | | | | |

### II. Extrusion

The solder billets were extruded with a die at 200-300° C and 10,342-13,790 kilopascals (1500-2000 pounds per square inch (psi)) to form solder wires having a diameter of about 0.762 mm (0.030 inch). Then, the solder wires were wound onto a spool having an inner hub diameter of 51 mm (2 inches) and two outer flanges having diameters of 102 mm (4 inches).

The extrusion results are presented in Table 7 below. The samples marked "Pass" were successfully extruded into wires and coiled onto the spool without breaking into two or more pieces. The samples marked "Fail" were too brittle to be formed into coiled wires.

**Table 7**

| **Sample** | **Extrusion** |
|---|---|
| 1 | Pass |
| 2 | Pass |
| 3 | Pass |
| 4 | Pass |
| 5 | Pass |
| 6 | Pass |
| 7 | Pass |
| 8 | Pass |
| 9 | Pass |
| 10 | Fail |
| 11 | Pass |
| 12 | Pass |
| 13 | Pass |
| 14 | Pass |
| 15 | Fail |
| 16 | Fail |
| 17 | Fail |
| 18 | Fail |

### III. Melting Properties

The melting properties of the sample solder wires were determined by differential scanning calorimetry (DSC) using a Perkin Elmer DSC7 machine. The solidus temperature and the liquidus temperature were measured with the machine. The melting temperature range was calculated as the difference between the liquidus temperature and the solidus temperature. The melting properties of the sample solder wires are presented in Table 8 below.

**Table 8**

| **Sample** | **Solidus Temperature (°C)** | **Liquidus Temperature (°C)** | **Melting Range (°C)** |
|---|---|---|---|
| 1 | 352.5 | 366.3 | 13.8 |
| 2 | 346.1 | 365.9 | 19.8 |
| 3 | 347.9 | 366.7 | 18.8 |
| 4 | 351.8 | 368.6 | 16.8 |
| 5 | 353.9 | 369.3 | 15.4 |
| 6 | 349.1 | 372.2 | 23.1 |
| 7 | 349.9 | 370.3 | 20.4 |
| 8 | 354.3 | 362.4 | 8.1 |
| 9 | 354.7 | 361.7 | 7.0 |
| 10 | 364.7 | 375.4 | 10.7 |
| 11 | 355.8 | 363.5 | 7.7 |
| 12 | 353.8 | 361.6 | 7.8 |
| 13 | 370.3 | 377.4 | 7.1 |
| 14 | 332.8 | 368.8 | 36.0 |
| 15 | 363.2 | 381.5 | 18.3 |
| 16 | 351.7 | 370.3 | 18.6 |
| 17 | 343.5 | 365.4 | 21.9 |
| 18 | 339.4 | 353.9 | 14.5 |

### IV. Mechanical Properties

Elongation of the sample solder wires was evaluated by operating an Instron 4465 machine at room temperature according to ASTM E8, entitled "Standard Test Methods for Tension Testing of Metallic Materials."

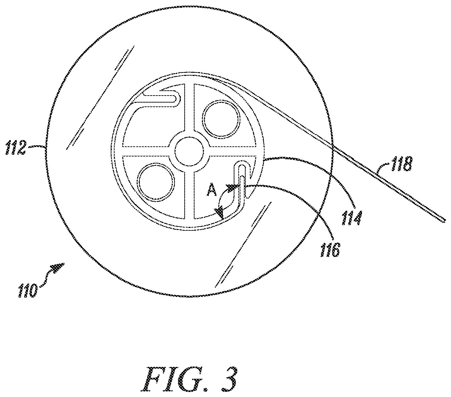

Ductility of the sample solder wires was determined by performing a bend high angle breakage rate (Bend BR-HA) test at room temperature. FIG. 3 illustrates the experimental setup for the Bend BR-HA ductility test. As shown, spool 110 includes parallel flanges 112, inner hub 114, and slot 116. Inner hub 114 is positioned between parallel flanges 112, creating a space therebetween. Inner hub 114 has a diameter of 51 mm and flanges 112 have diameters of 102 mm. Slot 116 is formed in inner hub 114. One end of wire 118 is inserted into slot 116 and wire 118 is rolled onto inner hub 114. As shown in FIG. 3, the end of wire 118 in hole 116 forms an angle A with the wire 118 rolled in inner hub 114, where the angle A is greater than 90°. The test evaluated whether each wire 118 could be successfully bent and wound around the hub 114 of the empty spool 110 one time without breaking. For each sample, 10 trials of the Bend BR-HA ductility test were performed.

The mechanical properties of the sample solder wires are presented in Table 9 below. With respect to the Bend BR-HA ductility test, the samples marked "Pass" were successfully bent and wound without breaking during at least 7 of the 10 trials, while the samples marked "Fail" broke during at least 4 of the 10 trials.

**Table 9**

| **Sample** | **Elongation (%)** | **Bend BR-HA Ductility** |
|---|---|---|
| 1 | 24.5 | Pass |
| 2 | 6.9 | Fail |
| 3 | 27.6 | Fail |
| 4 | 35.4 | Pass |
| 5 | 52.2 | Pass |
| 6 | 15.9 | Fail |
| 7 | 14.9 | Pass |
| 8 | 20.2 | Pass |
| 9 | 63.4 | Pass |
| 10 | N/A | Fail |
| 11 | 46.9 | Pass |
| 12 | 25.8 | Pass |
| 13 | 53.9 | Pass |
| 14 | 14.3 | Fail |
| 15 | N/A | Fail |
| 16 | N/A | Fail |
| 17 | N/A | Fail |
| 18 | N/A | Fail |

### V. Wetting Properties

The wetting properties of the sample solder wires were determined by operating an ASM SD890A die bonder at 410°C using forming gas containing 95 volume percent nitrogen and 5 volume percent hydrogen. The solder wire was fed to a hot copper lead frame, causing the solder wire to melt and form a dot on the lead frame.

To evaluate "dot size," the size of each dot was measured on a scale of 1-5, with 1 representing a small dot (i.e., low wetting) and 5 representing a large dot (i.e., high wetting).

To evaluate "wetting pattern," each dot was placed under a press weighing about 100 grams. The size of each pressed dot was measured on a scale of 1-5, with 1 representing a small spread (i.e., low wetting) and 5 representing a large spread (i.e., high wetting).

The wetting properties of the sample solder wires are presented in Table 10 below.

**Table 10**

| **Sample** | **Wetting Pattern** | **Dot Size** |
|---|---|---|
| 1 | 5 | 5 |
| 2 | 3 | 5 |
| 3 | 2 | 4 |
| 4 | 2 | 3 |
| 5 | 1 | 3 |
| 6 | 1 | 1 |
| 7 | 2 | 1 |
| 8 | 4 | 1 |
| 9 | 3 | 3 |
| 10 | 4 | N/A |
| 11 | 4 | 3 |
| 12 | 3 | 3 |
| 13 | 3 | 3 |
| 14 | 4 | 1 |
| 15 | N/A | N/A |
| 16 | N/A | N/A |
| 17 | N/A | N/A |
| 18 | N/A | N/A |

### VI. Analysis

Sample 1 exhibited the best overall performance - good extrusion properties (Table 7), good mechanical properties, including elongation and ductility (Table 9), and good wetting properties (Table 10).

High levels of magnesium were shown to negatively impact extrusion and ductility without improving wetting compared to Sample 1. Sample 1 contained 0.25 weight percent magnesium. Samples 10 and 15-17, which contained 1 weight percent magnesium or more, were too brittle to form extruded wires (Table 7). Samples 6 and 14, which contained 0.5 weight percent magnesium or more, were successfully extruded (Table 7) but failed the Bend BR-HA ductility test (Table 9). None of the Samples 6, 10, and 14-17 exhibited improved wetting compared to Sample 1 (Table 10).

Low levels of magnesium also failed to improve wetting compared to Sample 1. Again, Sample 1 contained 0.25 weight percent magnesium. Samples 8, 9, and 11, which contained 0.12 weight percent magnesium or less, exhibited less wetting than Sample 1 (Table 10).

High levels of gallium were shown to negatively impact extrusion and ductility without improving wetting compared to Sample 1. Sample 1 contained 0.5 weight percent gallium. Samples 10, 15, 16, and 18, which contained 1 weight percent gallium or more, were too brittle to form extruded wires (Table 7). Samples 2 and 14, which also contained 1 weight percent gallium or more, were successfully extruded (Table 7) but failed the Bend BR-HA ductility test (Table 9). None of the Samples 2, 10, 14-16, and 18 exhibited improved wetting compared to Sample 1 (Table 10).

Low levels of gallium also failed to improve wetting compared to Sample 1. Again, Sample 1 contained 0.5 weight percent gallium. Samples 5 and 11, which contained 0.05 weight percent gallium, exhibited less wetting than Sample 1 (Table 10).

High and low levels of germanium also failed to improve wetting compared to Sample 1. Sample 1 contained 5 weight percent germanium. Samples 12, 13, and 14, which contained 8, 2, and 0 weight percent germanium, respectively, exhibited less wetting than Sample 1 (Table 10).

### Example 2

### Preparation of Lead Frame Constructs

In this Example, lead frame constructs according to the present disclosure were prepared. Pure copper lead frames were obtained, and were plated with pure nickel to a thickness of 6 µm using an electro-less plating process.

Relatively thin layers of copper were deposited onto the nickel layers via an electroplating process.

FIG. 4 is an SEM cross sectional image of a first lead frame construct having a copper layer of 2 µm thickness, and FIG. 5 is an SEM cross sectional image of a second lead frame construct having a copper layer of 8 µm thickness. Each lead frame construct includes copper lead frame 200, nickel plating 202, and copper flash or copper layer 204.

### Example 3

### Solder Wetting Study

A zinc-based solder composition was heated above its liquidus temperature and was wetted onto the lead frames of FIGS. 4 and 5 using an ASM 890 die bonder, with the results shown in the images of FIGS. 6 and 7, respectively. As shown in FIGS. 6 and 7, the zinc-based solder wetted uniformly across the copper layers of the lead frames with broad coverage on both of the lead frames having the 2 µm (FIG. 6) and 8 µm (FIG. 7) copper layers.

In a comparative example, the same zinc-based solder composition was wetted onto a control lead frame which included a nickel barrier layer but not an overlying copper layer. As may be seen in FIG. 8, the solder wetting was not uniform, but rather significant areas of de-wetted solder were observed, together with a solder ball representing a volume of solder that became separated from the main solder field during solder flow.

### Example 4

### Analysis of Cu/Zn Intermetallic Layer

FIGS. 9 and 11 are SEM cross sectional images taken of the lead frames of FIGS. 6 and 7, respectively, after flow and solidification of the zinc-based solder onto the lead frames. FIGS. 10 and 12 are X-ray line scan elemental analyses taken at various depths throughout the cross sections of the material lead frames.

Referring to FIGS. 9 and 10, the lead frame construct includes copper lead frame 300, nickel layer 302, copper layer 304, copper/zinc intermetallic layer 306 and zinc-based solder 308 for the lead frame having a 2 µm copper layer, substantially all of the copper in the layer reacted with zinc from the zinc-based solder to form a Cu/Zn intermetallic layer having a thickness of about 2 µm, with substantially no copper of the layer remaining as unreacted, pure copper. Referring to FIG. 10, it may be seen that a distinct layer of pure nickel, as well as a Cu/Zn intermetallic layer, were formed.

Referring to FIGS. 11 and 12, for the lead frame having a 8 µm copper layer, copper up to a depth of about 4 µm in the copper layer reacted with zinc from the zinc-based solder to form a Cu/Zn intermetallic layer having a thickness of about 4 µm, with about 4 µm of pure copper of the original copper layer remaining pure and unreacted. Referring to FIG. 12, it may be seen that distinct layers of pure nickel and pure copper, as well as a Cu/Zn intermetallic layer, were formed.

## Claims

1. A lead free and tin free solder composition consisting of:
77 to 93 weight percent zinc;
3 to 15 weight percent aluminum;
3 to 7 weight percent germanium;
0.25 to 0.50 weight percent gallium;
0.125 to 0.35 weight percent magnesium; and
optionally 0.001 to 2.5 weight percent neodymium.

2. The solder composition of claim 1 comprising about 0.15 to about 0.35 weight percent magnesium.

3. The solder composition of claim 1 comprising:
6 weight percent aluminum; and
5 weight percent germanium.

4. The solder composition of claim 1 consisting of zinc, aluminum, germanium, gallium, and magnesium.

5. The solder composition of claim 1 consisting of:
88.25 weight percent zinc;
6 weight percent aluminum;
5 weight percent germanium
0.5 weight percent gallium; and
0.25 weight percent magnesium.

6. The solder composition of claim 1 wherein the solder composition contains more gallium than magnesium.

7. A solder wire comprising the solder composition of claim 1.

8. The solder wire of claim 7, wherein the solder wire has a diameter of less than 1 millimeter.

## Patentansprüche

1. Bleifreie und zinnfreie Lötmittelzusammensetzung, bestehend aus:
77 bis 93 Gewichtsprozent Zink;
3 bis 15 Gewichtsprozent Aluminium;
3 bis 7 Gewichtsprozent Germanium;
0,25 bis 0,50 Gewichtsprozent Gallium;
0,125 bis 0,35 Gewichtsprozent Magnesium; und
gegebenenfalls 0,001 bis 2,5 Gewichtsprozent Neodym.

2. Lötmittelzusammensetzung gemäß Anspruch 1, umfassend etwa 0,15 bis etwa 0,35 Gewichtsprozent Magnesium.

3. Lötmittelzusammensetzung gemäß Anspruch 1, umfassend:
6 Gewichtsprozent Aluminium; und
5 Gewichtsprozent Germanium.

4. Lötmittelzusammensetzung gemäß Anspruch 1, bestehend aus Zink, Aluminium, Germanium, Gallium und Magnesium.

5. Lötmittelzusammensetzung gemäß Anspruch 1, bestehend aus:
88,25 Gewichtsprozent Zink;
6 Gewichtsprozent Aluminium;
5 Gewichtsprozent Germanium;
0,5 Gewichtsprozent Gallium; und
0,25 Gewichtsprozent Magnesium.

6. Lötmittelzusammensetzung gemäß Anspruch 1, wobei die Lötmittelzusammensetzung mehr Gallium als Magnesium enthält.

7. Lötmitteldraht, umfassend die Lötmittelzusammensetzung gemäß Anspruch 1.

8. Lötmitteldraht gemäß Anspruch 7, wobei der Lötmitteldraht einen Durchmesser von weniger als 1 Millimeter aufweist.

## Revendications

1. Composition de brasure sans plomb et sans étain constituée de :
77 à 93 pour cent en poids de zinc ;
3 à 15 pour cent en poids d'aluminium ;
3 à 7 pour cent en poids de germanium ;
0,25 à 0,50 pour cent en poids de gallium ;
0,125 à 0,35 pour cent en poids de magnésium ; et
éventuellement 0,001 à 2,5 pour cent en poids de néodyme.

2. Composition de brasure selon la revendication 1 comprenant environ 0,15 à environ 0,35 pour cent en poids de magnésium.

3. Composition de brasure selon la revendication 1 comprenant :
6 pour cent en poids d'aluminium ; et
5 pour cent en poids de germanium.

4. Composition de brasure selon la revendication 1 constituée de zinc, d'aluminium, de germanium, de gallium et de magnésium.

5. Composition de brasure selon la revendication 1 constituée de :
88,25 pour cent en poids de zinc ;
6 pour cent en poids d'aluminium ;
5 pour cent en poids de germanium ;
0,5 pour cent en poids de gallium ; et
0,25 pour cent en poids de magnésium.

6. Composition de brasure selon la revendication 1, la composition de brasure contenant plus de gallium que de magnésium.

7. Fil de brasure comprenant la composition de brasure selon la revendication 1.

8. Fil de brasure selon la revendication 7, le fil de brasure ayant un diamètre inférieur à 1 millimètre.
